# EUROPÄISCHE PATENTSCHRIFT

(11) **EP 3 201 260 B1**
(45) Veröffentlichungstag und Bekanntmachung des Hinweises auf die Patenterteilung: **09.02.2022**
(21) Anmeldenummer: 15775667.7
(22) Anmeldetag: 30.09.2015
(51) Int. Cl.: C08J 3/16, C08F 6/22, C09J 11/00, C08J 9/32

(54) **WÄSSRIGE KOAGULIERBARE POLYMERDISPERSION UND DEREN VERWENDUNG ALS KLEBSTOFF**
AQUEOUS COAGULATABLE POLYMER DISPERSION AND USE THEREOF AS AN ADHESIVE
DISPERSION AQUEUSE DE POLYMÈRE COAGULABLE ET SON UTILISATION EN TANT QUE COLLE

(30) Priorität: 01.10.2014 EP 14187381
(43) Veröffentlichungstag der Anmeldung: 09.08.2017
(73) Patentinhaber: Jowat SE, 32758 Detmold (DE)
(72) Erfinder: SCHMIDT, Christian, 32760 Detmold (DE); TERFLOTH, Christian, 32760 Detmold (DE)
(74) Vertreter: dompatent von Kreisler Selting Werner - Partnerschaft von Patent- und Rechtsanwälten mbB
(86) Internationale Anmeldenummer: PCT/EP2015/072546
(87) Internationale Veröffentlichungsnummer: WO 2016/050838

(56) Entgegenhaltungen:
- WO-A1-2007/142593
- US-A- 5 356 683
- US-A1- 2014 141 185
- US-B1- 6 740 373

## Beschreibung

### Technisches Gebiet

Die Erfindung betrifft ein Koagulat erhältlich durch thermische und/oder mechanische und/oder Ultraschall initiierte Koagulation einer wässrigen Polymerdispersion umfassend wenigstens ein in wässriger Phase dispergiertes Polymer, ein Treibmittel enthaltende, thermoplastische Mikrosphären, und wenigstens eine zusätzliche Komponente die ausgewählt ist aus der Gruppe bestehend aus Polyolen, Polyaminen und thermoplastischen Polymeren. Ferner betrifft die Erfindung ein Verfahren zur Herstellung des Koagulats.

Weiterhin betrifft die Erfindung einen Klebstoff oder Bindemittel umfassend oder bestehend aus dem Koagulat, ein Substrat, welches ganz oder teilweise mit diesem Koagulat beschichtet ist, ein Verfahren zur Herstellung eines solchen beschichteten Substrats, sowie durch dieses Verfahren erhältliche beschichtete Substrate. Das Koagulat kann als Klebstoff oder als Bindemittel bei 3D-Druck Verfahren verwendet werden.

### Hintergrund der Erfindung

Faltkartonagen und -schachteln sowie Beutel aus Papier/Folie-Verbunden sind vielseitige Verpackungsarten, die in allen Bereichen des Warentransports oder der Warenpräsentation Verwendung finden. Die zur Herstellung der Verpackung notwendigen Klebeschritte durch Einsatz von unterschiedlichen Systemen (Dispersions- und Hotmelt-Klebstoff) mit unterschiedlichen Vor- und Nachteilen finden an unterschiedlichen Orten der Lieferkette statt.

Der Packmittelhersteller stellt beispielsweise aus Papier und Kartonqualitäten die Wellpappe (Testliner, Kraftliner) her. Aus diesem Rohmaterial wird durch Druck-, Kaschier-, Lackier- und Stanzprozesse der Verpackungsrohling hergestellt. Während bei Tray-Anwendungen (Tray-Aufrichten) die Arbeit des Packmittelherstellers beendet ist, muss für Falt- und Stülpschachteln noch eine Vorklebung der Längsnaht erfolgen. Dies wird im überwiegenden Fall durch den Einsatz von Dispersionsklebstoffen erreicht. Die hergestellten Verpackungen werden an den Abpacker geliefert, der sein zu transportierendes (d.h. zu vermarktendes) Gut in die Verpackung einfüllt und diese anschließend durch eine Klebung verschließt.

Um hohe Durchsatzzahlen und hohe Produktivität zu gewährleisten, kommen für den Karton- und Faltschachtelverschluss zumeist Hotmelt-Klebstoffe auf Basis von Ethylenvinylacetat (EVA) und Polyolefinen (PO) zum Einsatz. Da die Klebstoffe dieser Rohstoffbasen Abbindezeiten zwischen kleiner eine und drei Sekunden aufweisen, sind sie in idealer Weise dazu geeignet, die nach dem Anpressen auftretenden Rückstellkräfte der Verpackung schnell aufzufangen. Ein Dispersionsklebstoff schafft dies in der Regel nicht. Die Wertigkeit der Klebstoffe nimmt dabei von EVA bis zu PO zu.

WO 2014/078071 betrifft einen Heißschmelzhilfskleber auf Wasserbasis, welcher ein emulsionsbildendes Polymer, ein Konservierungsmittel, eine Vielzahl von vorexpandierten Microsphären und Wasser umfasst und für den teilweisen oder vollständigen Ersatz von Schmelzklebstoffen in Verpackungsmaterialien eingesetzt werden soll.

Während Commodity-Produkte auf EVA-Basis eine geringere Stabilität in der Schmelze, niedrigere Adhäsionseigenschaften in Bezug auf unterschiedliche Oberflächen, eine Neigung zu Geruchsbelastungen sowie eine geringe Transparenz aufweisen, weisen Produkte auf Basis von POs diese Nachteile weitestgehend nicht auf. Der höhere Nutzen bedeutet allerdings hier auch einen höheren Preis.

Nachteilig bei beiden genannten Systemen ist zum Beispiel ein im Vergleich zu Dispersionen geringerer Wärmestand (max. 70 °C), eine Schwächung der Klebung durch migrierende Bestandteile des Füllguts (Teeverpackungen) oder eine geringere mechanische Belastbarkeit (Einblasbefüllung). So wird im Bereich von Verpackungsbeuteln eine sogenannte Kombinationsverklebung bevorzugt, bei der ein Hotmelt parallel zu einer Dispersion aufgetragen wird. Der Hotmelt dient einem Initialzusammenhalt der Verpackung im Fertigungsprozess, während die Langzeitstabilität und Beständigkeit auf den Schultern der Dispersion ruht.

Mit dem Einsatz von Hotmelts in der Verpackungsindustrie sind seitens der Verarbeitung ebenfalls Nachteile verbunden. So muss der Hotmelt vor Gebrauch aufgeschmolzen und über die Zeit auf einer Verarbeitungstemperatur gehalten werden. Schlauchleitungen und Düsenapplikationssystem sind ebenfalls beheizt. Dies führt zu einem nicht unerheblichen Energieaufwand. Obwohl der Aufwand durch Entwicklungen der Auftragsgerätehersteller bereits gesenkt werden konnte (Nordson Freedom^{®} und Liberty^{®} System), besteht hier noch Ausbaupotenzial, da beispielsweise ein leicht zum Verblocken neigendes Material durch derartige Systeme nicht gefördert werden kann.

Einen Ansatz dieses Problem zu lösen beschreibt die WO 2011/072237. Hier wird eine thermisch aktivierbare Klebstoffzusammensetzung vom Plastisol-Typ beschrieben, welche Partikel eines ersten Polymers und Partikel eines zweiten Polymers in einem flüssigen, organischen Trägermedium (z.B. Pflanzenöle, epoxidierte Pflanzenöle, Biodiesel, Glycerin) dispergiert enthält. Bei Erreichen einer gewissen Aktivierungstemperatur lösen sich die Partikel des zweiten Polymers im Trägermedium entweder auf oder plastizieren darin.

Die Herstellung von gebundenen Büchern ist trotz der Konkurrenz durch elektronische Medien nach wie vor ein bedeutender Markt mit hohen Anforderungen an das fertige Produkt.

Bei der Buchproduktion wird zwischen Soft- und Hardcover-Büchern unterschieden. Je nach Art des jeweiligen Produktes werden zur Herstellung diverse Klebeschritte benötigt. Einer der wichtigsten Schritte ist die Klebebindung, d.h. die Verbindung der einzelnen Seiten des Buches zum sogenannten Buchblock sowie, im Falle des Softcover-Buchs, mit dem Cover. Klebtechnisch erfolgt dieser Prozessschritt je nach Art der Maschine mit Hilfe von Dispersionsklebstoffen, konventionellen thermoplastischen Schmelzklebstoffen auf EVA oder PO Basis sowie in zunehmenden Maße mit reaktiven Polyurethan-Schmelzklebstoffen (PUR). Jedes dieser Systeme besitzt seine Vor- und Nachteile. Bei Dispersionsklebstoffen wird die gute Penetration in die Blattkante (Faser) und die damit verbundene Festigkeit sowie das Aufschlagsverhalten (Lay-Flat-Verhalten) geschätzt. Im Gegenzug wird jedoch von vielen Buchbindern die mangelnde Produktionsgeschwindigkeit bemängelt. Diese kann zum Beispiel durch die Verwendung von Schmelzklebstoffen gesteigert werden. Oftmals muss dafür jedoch eine geringere Festigkeit und ein schlechteres Lay-Flat-Verhalten in Kauf genommen werden.

In diesem Anwendungsfall ist ein Klebsystem wünschenswert, das die Vorteile der einzelnen Klebstoffsysteme kombiniert, ohne deren Nachteile aufzuweisen.

Filtermedien, beispielsweise für den Automobil- oder Innenbereich, haben die wichtige Aufgabe, Hochleistungsaggregate, wie Motoren oder elektronische Bauteile vor Belastungen durch Ruß, Staub oder sonstige Verunreinigungen zu schützen. Zum Einsatz kommen hier Filtermaterialien aus behandelten und unbehandelten Papierqualitäten sowie diversen Vliesstoffen oder Nanofasern. Bei der industriellen Fertigung der Filtermedien werden Klebstoffe zu unterschiedlichen Zwecken eingesetzt. Neben der Anbindung von Adsorbtionsmitteln wie z.B. Aktivkohle, dient der Klebstoff in erster Linie der konstruktiven formgebenden Klebung des Filters. Hier seien insbesondere zwei wichtige Fertigungsschritte genannt. Beim sogenannten Plissieren wird das flächige Filtermaterial gefaltet und die einzelnen Falten auf genau definiertem Abstand miteinander verbunden. Ziel des Plissierens ist es, die Filteroberfläche auf dem zur Verfügung stehenden Raum möglichst zu maximieren. Bei der Fertigung wird dazu eine Klebstoffraupe vor der Faltung auf den Filterverbund aufgelegt. Bei der nachfolgenden Faltung kommt Klebstoffraupe auf Klebstoffraupe zu liegen und sorgt so für einen gleichbleibenden Abstand. Zusätzlich wird auf den gefalteten Einheiten eine weitere Klebstoffraupe appliziert, die für zusätzliche Festigkeit sorgt. Als letzter Schritt der Fertigung wird das plissierte Material in einen Rahmen eingebettet. Dieser sorgt für Formstabilität und Festigkeit auch unter höchsten Belastungen.

Als Klebsystem kommen heute vornehmlich thermoplastische Schmelzklebstoffe auf EVA- und PO-Basis zum Einsatz. Die Anforderungen an diese Systeme im Hinblick auf Belastbarkeit sind sehr hoch. Neben einer dem Verarbeitungsprozess angemessenen offenen Zeit, bspw. um das Plissieren zu ermöglichen, muss das Abbinden sehr rasch erfolgen. Zusätzlich werden fertige Filtermaterialien nach der Klebung teilweise einer hohen thermischen Behandlung unterzogen, der die Klebung natürlich Stand halten muss. Insbesondere im Hinblick auf diese Belastung wäre der Einsatz von Dispersionsklebstoffen mit hohem Wärmestand vorteilhaft. Darüber hinaus gelingt der Dispersion eine bessere Penetration in das Filtermedium, was zusätzlich die mechanische Festigkeit erhöht. Dies wäre ein zusätzlicher Vorteil für die Rahmenklebung. Da Dispersionssysteme im Vergleich zu Schmelzklebstoffen deutlich geringere Abbindegeschwindigkeiten aufweisen, führt der Einsatz von Dispersionen zu einer Verschlechterung der Produktivität. Auch hier wäre es daher wünschenswert ein Klebsystem zur Verfügung zu haben, das die Vorteile der einzelnen Klebstoffarten vereint, ohne die jeweiligen Nachteile aufzuweisen.

Aus der Sicht des Klebstoffanwenders ist der Einsatz von Dispersions- und Hotmelt-Systemen in den genannten Beispielanwendungen mit den oben genannten Vor- und Nachteilen verbunden. Ziel der Erfindung war es daher, eine Zusammensetzung und ein Verfahren zu entwickeln, das jeweils die Vorteile der einzelnen Systeme in Hinblick auf Transport, Verarbeitung und Endfestigkeit nutzt, ohne die jeweiligen Nachteile aufzuweisen.

Es ist daher wünschenswert eine wässrige Polymerdispersion zur Verfügung zu stellen, die wie ein Dispersionsklebstoff formuliert, abgefüllt und transportiert werden kann, jedoch sich mit Hilfe eines Triggers in einem Auftragsgerät (zum Beispiel Temperatur, Scherung, Ultraschall oder Druck) in ihren Eigenschaften (Anzugsgeschwindigkeit, Festigkeitsaufbau) wie ein Hotmelt verhält und zusätzlich nach Applikation die Eigenschaften einer Dispersion behält (Wärmestand, Flexibilität, Resistenz gegen migrierende Substanzen).

Das Produktions-/Herstellungsverfahren des sogenannten 3D-Drucks nimmt immer weiter an Bedeutung als Schlüsseltechnologie zu. Die Vorteile der Technologie sind unter anderem eine hohe Gestaltungsfreiheit im Objektdesign und geringere Zeiten von der Idee bis zur Vermarktung. Eine der Hauptanwendungen der Technologie liegt daher bspw. auf dem Gebiet des "Rapid Prototyping". Bisherige Märkte, in denen diese Produktionstechnologie bereits Einzug gehalten hat, sind beispielsweise die Automobilindustrie, die Luftfahrt oder die Gesundheitsindustrie. Im Heimanwendermarkt für die Bereiche Ersatzteilfertigung oder selbstgestalteter Objekte "ready to use out of the 3D printer" halten 3D-Drucker ebenfalls immer mehr Einzug.

Die Herstellung des 3D-gedruckten Objekts aus Werkstoffen aus Kunststoff kann prinzipiell auf mehreren Wegen erfolgen (3Druck.com). Als Beispiele seien genannt:
1.) "Additive Layer Manufacturing"
   Diese Form der Herstellung benötigt einen puderförmigen Feststoff als Basismaterial sowie ein Binde- oder Fixiermittel. Über einen Druckkopf, ähnlich dem eines Tintenstrahldruckers, wird das flüssige Bindemittel punktgenau auf die Pulverschicht aufgetragen und ausgehärtet. Anschließend erfolgt ein neuer Auftrag des Pulvers auf die gebundene erste Schicht sowie eine weitere Fixierung. Auf diese Weise entsteht Schicht für Schicht ein 3D-Objekt aus einzelnen 2D-Lagen die miteinander verbunden werden.
2.) Fused Filament Fabrication
   Dieses Herstellungsverfahren nutzt schmelzbare Kunststoffe als Basismaterialien. Mit Hilfe eines Druckkopfes (Extruder), ähnlich dem eines Hotmelt-Auftragsgerätes, wird das vorgeschmolzene Polymer Schicht für Schicht auf eine beheizbare Plattform aufgebracht. Dies kann einerseits durch eine Bewegung des Druckkopfes oder der Plattform geschehen. Nach dem Abkühlen und Härten der Vorgängerschicht kann der Auftrag der nächsten Schicht erfolgen.
3.) Flüssig-Materialien (z.B. Stereolithographie)
   Die Basis der Produktion stellt ein Tank, gefüllt mit einem flüssigen Medium dar. Durch eine eingebrachte UV-Strahlung, einen Laser, einen Elektronenstrahl oder ähnliches, wird Schicht für Schicht die Oberfläche der Flüssigkeit gehärtet und verfestigt. Danach wird das Objekt abgesenkt, so dass immer neue Flüssigkeit für den Aufbau an der Oberfläche verfügbar ist. Durch die Möglichkeit der punktgenauen Lasersteuerung ist dieses Verfahren eines der exaktesten, allerdings auch eines der kostenintensivsten.

Werkstoffseitig kommen beim 3D-Druck je nach Verfahren unterschiedliche Rohstoffe zum Einsatz. So werden für die Fixierung von Pulvern (z.B. PMMA oder PA) im Additive Layer Manufacturing beispielsweise zweikomponentige Bindemittel auf Basis von Diaminen und Dicarbonylverbindungen eingesetzt (DE 10 2010 056 346 A1). Diese reagieren nach der Vermischung zu Schiff'schen Basen.

Bei der Fused Filament Fabrication Technik werden thermoplastische Materialien, wie PLA, PA oder auch Polycarbonate verwendet. Diese sind oftmals in Form einer aufgewickelten Spule erhältlich, die direkt in das Gerät eingesetzt wird.

Im Falle der Stereolithographie kommen reaktive Monomere zum Einsatz, die durch die gewählte Energiequelle (Aktivierung) miteinander verknüpft werden.

Aus Sicht der verwendeten Bindemittel bietet jedes dieser Verfahren seine Vor- und Nachteile. Im Falle der 2K-Mischung im Bereich des Additive Layer Manufacturing sei als ein möglicher Nachteil die Notwendigkeit einer präzisen Mischung der beiden Komponenten auf dem Pulvermaterial genannt. Im Bereich der Fused Filament Fabrication müssen die eingesetzten Polymere zuerst bei hohen Temperaturen aufgeschmolzen werden. Zudem ist die Auswahl an möglichen Polymeren (noch) sehr beschränkt. Die Vorratshaltung in Form einer Spule bietet zwar eine leichte Zugänglichkeit, jedoch zu Lasten eines höheren Platzbedarfs. Bei der Stereolithographie muss die Reaktivmischung gut geschützt oder stabilisiert sein, um eine mögliche vorzeitige Reaktion zu verhindern.

Wünschenswert ist es daher ferner, eine Bindemittel-Alternative zur Verfügung zu stellen, die das Spektrum nutzbarer Polymere erweitert und Nachteile möglichst minimiert und die, als wässriges Bindemittel formuliert, transportiert und gelagert werden kann, also viele der Handling-Vorteile einer Dispersion aufweist, sich jedoch unter Einwirkung eines Triggers in einem Auftragsgerät (zum Beispiel Temperatur, Scherung, Ultraschall oder Druck) wie ein schmelzbares Bindemittel verhält und nach Applikation die Eigenschaften eines herkömmlichen Bindemittels besitzt (Wärmestand, Resistenz gegen verschiedene Stoffe, Flexibilität, mechanische Festigkeit und Ähnliches).

### Kurzbeschreibung der Erfindung

Die Erfindung betrifft:
1. ein Koagulat erhältlich durch thermische und/oder mechanische und/oder Ultraschall-initiierte Koagulation einer wässrigen Polymerdispersion umfassend
   (i) wenigstens ein in wässriger Phase dispergiertes Polymer ausgewählt aus der Gruppe bestehend aus Polyurethan, Vinylacetat/Ethylen-Copolymeren, Polyvinylacetat (PVAc), Polyacrylat, Polystyrolacrylat, Styrol/Butadien-(Block-) Copolymer, Styrol/Isopren-(Block-) Copolymer, Polyisopren-Copolymer, Polychloropren, Polyolefin Homopolymere und Copolymere aus C₂-C₈ Alkenen, Polyepoxid und Polymilchsäure,
   (ii) ein Treibmittel enthaltende, thermoplastische Mikrosphären, und
   (iii) wenigstens eine zusätzliche Komponente, die ausgewählt ist aus der Gruppe bestehend aus Polyolen, Polyaminen und thermoplastischen Polymeren, die ausgewählt sind aus der Gruppe bestehend aus Polyamid, Polyester und Polystyrol.
2. Koagulat gemäß Punkt 1, dadurch gekennzeichnet, dass das Polyol ausgewählt ist aus der Gruppe bestehend aus (Poly-) Propylenglycol, (Poly-) Ethylenglycol, Glycerin und Stärke und das Polyamin Harnstoff ist. Die thermoplastischen Polymere sind ausgewählt aus der Gruppe bestehend aus Polyamid, Polyester, und Polystyrol. Ethylenvinylacetat (EVA) ist als zusätzliche Komponente bevorzugt. Das Ethylenvinylacetat kann einen Vinylacetat-Anteil von bis zu 28 Gew.-%, vorzugsweise wenigstens 14 Gew.-% aufweisen.
3. Koagulat gemäß einem oder mehreren der vorhergehenden Punkte, dadurch gekennzeichnet, dass sie durch Energieeintrag koaguliert.
4. Koagulat gemäß einem oder mehreren der vorhergehenden Punkte, dadurch gekennzeichnet, dass der Energieeintrag zur Koagulation thermisch und/oder mechanisch und/oder durch Ultraschall erfolgt. Ein Beispiel für einen mechanischen Energieeintrag in ein Stoffsystem ist die Scherung.
5. Koagulat gemäß einem oder mehreren der vorhergehenden Punkte, dadurch gekennzeichnet, dass das dispergierte Polymer 40 Gew.-% oder mehr C₁-C₂₀ Alkyl(meth)acrylate, vorzugsweise C₁-C₈ Alkyl(meth)acrylate, besonders bevorzugt C₁-C₄ Alkyl(meth)acrylate aufweist.
6. Koagulat gemäß einem oder mehreren der vorhergehenden Punkte, dadurch gekennzeichnet, dass das dispergierte Polymer eine Glasübergangstemperatur von 35 °C oder weniger, oder 0 °C oder weniger aufweist.
7. Koagulat gemäß einem oder mehreren der vorhergehenden Punkte, dadurch gekennzeichnet, dass es sich bei der wässrigen Polymerdispersion um einen Klebstoff handelt.
8. Koagulat gemäß einem oder mehreren der vorhergehenden Punkte, dadurch gekennzeichnet, dass die wässrige Polymerdispersion wenigstens einen Tackifier in einer Menge 40 Gew.-% oder weniger, oder 1 Gew.-% oder mehr bis 35 Gew.-% oder weniger enthält.
9. Koagulat gemäß einem oder mehreren der vorhergehenden Punkte, dadurch gekennzeichnet, dass der Gehalt an dispergiertem Polymer in der Polymerdispersion von 20 Gew.-% oder mehr bis 75 Gew.-% oder weniger beträgt, der Gehalt an den Mikrosphären in der Polymerdispersion von 0,1 Gew.-% oder mehr bis 20 Gew.-% oder weniger beträgt und der Gesamtfeststoffgehalt der wässrigen Polymerdispersion vorzugsweise 30 Gew.-% oder mehr bis 80 Gew.-% oder weniger beträgt.
10. Koagulat gemäß einem oder mehreren der vorhergehenden Punkte, dadurch gekennzeichnet, dass der Gehalt an zusätzlicher Komponente in der Polymerdispersion 1 Gew.-% oder mehr bis 15 Gew.-% oder weniger, 1 Gew.-% oder mehr bis 8 Gew.-% oder weniger, oder 2 Gew.-% oder mehr bis 5 Gew.-% oder weniger beträgt.
11. Koagulat gemäß einem oder mehreren der vorhergehenden Punkte, dadurch gekennzeichnet, dass die Mikrosphären eine Schale aus thermoplastischem Polymer und darin eingeschlossenem Treibmittel, das Treibmittel vorzugsweise bestehend aus einem oder mehreren Kohlenwasserstoff(en), der/die einen Kohlenstoff oder mehr bis acht Kohlenstoffe oder weniger in der Kette, aufweist/aufweisen, wobei die Mikrosphären in nicht expandiertem Zustand eine Partikelgröße mit einem Volumenmedian D(0,5) von 5 µm oder mehr bis 40 µm oder weniger aufweisen.
12. Koagulat gemäß einem oder mehreren der vorhergehenden Punkte, dadurch gekennzeichnet, dass der wenigstens eine C₁ bis C₈ Kohlenwasserstoff ausgewählt ist aus der Gruppe bestehend aus Methan, Ethan, n-Butan, Isobutan, Pentan oder dessen Strukturisomeren, Hexan oder dessen Strukturisomeren, Heptan oder dessen Strukturisomeren und Octan oder dessen Strukturisomeren, oder deren fluorierten und/oder chlorierten Derivate.
13. Koagulat gemäß einem oder mehreren der vorhergehenden Punkte, dadurch gekennzeichnet, dass die Schale der Mikrosphären gebildet ist aus einem Copolymer aus ethylenisch ungesättigten Monomeren umfassend wenigstens ein Monomer ausgewählt aus (Meth)acrylsäureester-Monomeren, Vinylidenhalogenid-Monomeren, Acrylnitril und Vinylether-Monomeren.
14. Koagulat gemäß einem oder mehreren der vorhergehenden Punkte, dadurch gekennzeichnet, dass die Schale der Mikrosphären gebildet ist aus einem Copolymer aus Monomeren umfassend Alkyl(meth)acrylat (z.B. Methyl-, Ethyl-, Propyl- oder Butyl(meth)acrylat), Vinylidenchlorid und Acrylnitril oder aus Monomeren umfassend wenigstens ein Vinylether-Monomer und Acrylnitril.
15. Koagulat gemäß einem oder mehreren der vorhergehenden Punkte, dadurch gekennzeichnet, dass die Mikrosphären eine Expansionsstarttemperatur (Tₛₜₐᵣₜ) von 40 °C oder mehr bis 140 °C oder weniger und eine Temperatur maximaler Expansion (Tₘₐₓ), welche höher liegt als Tₛₜₐᵣₜ und im Bereich von 80 °C oder mehr bis 200 °C oder weniger liegt, aufweisen.
16. Koagulat gemäß einem oder mehreren der vorhergehenden Punkte, dadurch gekennzeichnet, dass die Koagulation thermisch erfolgt durch Erwärmen auf eine Temperatur von 50 °C oder mehr bis 150 °C oder weniger, vorzugsweise 60 °C oder mehr bis 110 °C oder weniger, und/oder dass die Koagulation durch Scherung erfolgt mit Scherraten von 100 1/s oder mehr bis 500000 1/s oder weniger.
17. Klebstoff oder Bindemittel umfassend oder bestehend aus dem Koagulat gemäß irgendeinem oder mehreren der vorherigen Punkte. In einer bevorzugten Ausgestaltung entspricht der Klebstoff dem Koagulat.
18. Substrat ganz oder teilweise beschichtet mit dem Koagulat gemäß einem oder mehreren der Punkte 1 bis 16, oder Klebstoff gemäß Punkt 17.
19. Beschichtetes Substrat gemäß Punkt 18, dadurch gekennzeichnet, dass das Substrat ausgewählt ist aus der Gruppe bestehend aus Papier, Pappe, Karton, Holz, Stein, Beton, Non-Woven aus künstlichen und/oder natürlichen Fasern, gewebte Textilien aus künstlichen und/oder natürlichen Fasern, offenporigen oder geschlossen-porigen Polymerschaumstoffen, insbesondere bestehend aus Polyurethan, Polyester, Polyethylen, Polypropylen und Polystyrol, oder Komposite der vorgenannten Substrate.
20. Beschichtetes Substrat gemäß Punkt 18 oder 19, dadurch gekennzeichnet, dass das Substrat auf der der Klebstoffbeschichtung gegenüberliegenden Seite ganz oder teilweise mit einer Kunststoffbeschichtung (einem Kunststofffilm) ausgerüstet ist.
21. 3D-Druck-Gebilde oder Objekt (d.h. dreidimensionales Werkstück) umfassend das Bindemittel gemäß Punkt 17.
22. Verfahren zur Herstellung eines beschichteten Substrats, wie in irgendeinem oder mehreren der Punkte 18 bis 20 definiert, dadurch gekennzeichnet, dass das Koagulat, wie in irgendeinem oder mehreren der Punkte 1 bis 16 definiert, oder der Klebstoff, wie in Punkt 17 definiert, ganz oder teilweise auf die Oberfläche wenigstens eines Substrats aufgetragen wird.
23. Verfahren gemäß Punkt 22, dadurch gekennzeichnet, dass Substrat ein Karton ist.
24. Verfahren gemäß Punkt 23, dadurch gekennzeichnet, dass der Karton eine Verpackung ist und das Koagulat/der Klebstoff auf einen verschließbaren Bereich des Kartons aufgetragen wird und die Verpackung aus dem Karton mittels des aufgetragenen, Koagulats/Klebstoffs verschlossen wird.
25. Beschichtete Substrate, erhältlich durch ein Verfahren gemäß einem oder mehreren der Punkte 22 bis 24.
26. Verwendung des Koagulats gemäß einem oder mehreren der Punkte 1 bis 16 als Klebstoff zum Verbinden von Substraten oder als Bindemittel bei 3D-Druck Verfahren.
27. Verfahren zur Herstellung eines Koagulats, wie in einem oder mehreren der Punkte 1 bis 16 definiert, durch thermische und/oder mechanische und/oder Ultraschall-initiierte Koagulation einer wässrigen Polymerdispersion umfassend
   (i) wenigstens ein in wässriger Phase dispergiertes Polymer ausgewählt aus der Gruppe bestehend aus Polyurethan, Vinylacetat/Ethylen-Copolymeren, Polyvinylacetat (PVAc), Polyacrylat, Polystyrolacrylat, Styrol/Butadien-(Block-) Copolymer, Styrol/Isopren-(Block-) Copolymer, Polyisopren-Copolymer, Polychloropren, Polyolefin Homopolymere und Copolymere aus C₂-C₈ Alkenen, Polyepoxid und Polymilchsäure,
   (ii) ein Treibmittel enthaltende, thermoplastische Mikrosphären, und
   (iii) wenigstens eine zusätzliche Komponente, die ausgewählt ist aus der Gruppe bestehend aus Polyolen, Polyaminen und thermoplastischen Polymeren, die ausgewählt sind aus der Gruppe bestehend aus Polyamid, Polyester und Polystyrol.

Die erfindungsgemäße wässrige Polymerdispersion ist dadurch herstellbar, dass man (i) das wenigstens eine in wässriger Phase dispergierte Polymer ausgewählt aus der oben beschriebenen Gruppe, (ii) die das Treibmittel enthaltenden, thermoplastischen Mikrosphären, und (iii) die wenigstens eine zusätzliche Komponente, die ausgewählt ist aus der Gruppe bestehend aus Polyolen, Polyaminen und thermoplastischem Polymer, die ausgewählt sind aus der Gruppe bestehend aus Polyamid, Polyester und Polystyrol, miteinander mischt.

Das erfindungsgemäße Koagulat kann aus der erfindungsgemäßen, wässrigen Polymerdispersion, dadurch hergestellt werden, dass man die wässrige Polymerdispersion, wie oben beschrieben, durch Energieeintrag koaguliert. Die koagulierte Masse kann anschließend vom Wasser getrennt werden, beispielsweise dadurch, dass man das Koagulat über eine Ausbringöffnung, vorzugsweise in Form einer Düse oder Kapillare, austrägt. Das Koagulat, welches das Wasser der Dispersion noch fein verteilt im Innern enthalten kann, kann als Klebstoff, z.B. in Form einer Klebstoffraupe verwendet werden. Gegebenenfalls noch im Koagulat enthaltene Wasserreste werden an das Substrat und/oder die Umgebung abgegeben. Das Koagulat kann ferner als Bindemittel für Werkstoffe (z.B. Kunststoffe, Kunstharze, Keramiken oder Metalle) beim 3D-Druck zur Herstellung von dreidimensionalen Werkstücken verwendet werden.

### Detaillierte Beschreibung

Die Erfindung betrifft ein Koagulat erhältlich durch thermische und/oder mechanische und/oder Ultraschall-initiierte Koagulation einer wässrigen Polymerdispersion umfassend
(i) wenigstens ein in wässriger Phase dispergiertes Polymer, wie oben beschrieben,
(ii) wenigstens ein Treibmittel enthaltende, thermoplastische Mikrosphären, und
(iii) wenigstens eine Komponente, die ausgewählt ist aus der Gruppe bestehend aus Polyolen, Polyaminen und thermoplastischen Polymeren, die ausgewählt sind aus der Gruppe bestehend aus Polyamid, Polyester und Polystyrol.

### In wässriger Phase dispergiertes Polymer

Der Gehalt an Polymer in der wässrigen Dispersion beträgt vorzugsweise 20 Gew.-% oder mehr bis 75 Gew.-% oder weniger oder bis 70 Gew.-% oder weniger, insbesondere 50 Gew.-% oder mehr bis 65 Gew.-% oder weniger.

Unter dem Begriff "wässrige Phase" wird eine Phase verstanden, welche zu wenigstens 50 Gew.-% aus Wasser besteht, bezogen auf das Gesamtgewicht der Phase. Vorzugsweise besteht es aus wenigstens 70 Gew.%, besonders bevorzugt wenigstens 80 Gew.%, ganz besonders bevorzugt aus wenigstens 90 Gew.%, insbesondere zu wenigstens 99 Gew.-% aus Wasser, bezogen auf das Gesamtgewicht der Phase. In einer bevorzugten Ausführungsform besteht die Phase ausschließlich aus Wasser.

Geeignete Polymere des dispergierten Polymers sind ausgewählt aus der Gruppe bestehend aus Polyurethan, Vinylacetat/Ethylen-Copolymeren, Polyvinylacetat (PVAc), Polyacrylat, Polystyrolacrylat, Styrol/Butadien-(Block-) Copolymer, Styrol/Isopren-(Block-) Copolymer, Polyisopren-Copolymer, Polychloropren, Polyolefin Homopolymere und Copolymere aus C₂-C₈ Alkenen, Polyepoxid und Polymilchsäure.

Insbesondere ist das in der wässrigen Dispersion dispergierte Polymer durch Polymerisation von radikalisch polymerisierbaren Verbindungen (Monomere) erhältlich oder es handelt es sich um durch Polykondensation erhältliche Polymere wie z.B. Polyurethane. Vorzugsweise wird die wässrige Polymerdispersion durch Emulsionspolymerisation hergestellt. Bei dem in der wässrigen Dispersion dispergierten Polymer handelt es sich daher vorzugsweise um ein Emulsionspolymerisat.

Im Folgenden sind der Ausdruck "(Meth)acryl" und ähnliche Ausdrücke eine abkürzende Schreibweise für "Acryl- oder Methacryl-".

Vorzugsweise besteht das Polymer zu wenigstens 40 Gew.-%, besonders bevorzugt zu wenigstens 60 Gew.-%, ganz besonders bevorzugt zu wenigstens 80 Gew.-% aus sogenannten Hauptmonomeren. Die Hauptmonomeren sind ausgewählt aus C₁-C₂₀ Alkyl(meth)acrylaten (z.B., aus Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren. Vorzugsweise besteht das dispergierte Polymer zu mehr als 40 Gew.-% aus C₁-C₂₀ Alkyl(meth)acrylaten.

Zu nennen sind z.B. (Meth)acrylsäurealkylester mit einem C₁-C₁₀ Alkylrest, wie z.B. Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z.B. Vinyllaurat, Vinylstearat, Vinylpropionat, Versaticsäurevinylester und Vinylacetat. Als vinylaromatische Verbindungen kommen Vinyltoluol alpha-und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt werden Vinylether von 1 bis 4 C-Atome enthaltenen Alkoholen. Als Kohlenwasserstoffe mit 2 bis 8 C-Atomen und ein oder zwei olefinischen Doppelbindungen seien Butadien, Isopren und Chloropren, Ethylen oder Propylen genannt. Aus Butadien oder Isopren erhaltene Polymere oder (Block-) Copolymere können auch nachträglich hydriert werden.

Als Hauptmonomere bevorzugt sind Vinylester, vorzugsweise Vinylacetat, insbesondere auch in Kombination mit Ethylen (kurz Vinylacetat/EthylenCopolymere), Butadien, Isopren insbesondere auch in Kombination mit Styrol (kurz Butadien/Styrol-(Block-) Copolymere oder Isopren/Styrol (Block-) Copolymere) und C₁-C₁₀-Alkyl(meth)acrylate, insbesondere C₁-C₈ Alkyl(meth)acrylate (kurz Polyacrylate) wobei Polyacrylate jeweils besonders bevorzugt sind.

Die Butadien/Styrol-(Block-) Copolymere oder Isopren/Styrol (Block-) Copolymere können mit Maleinsäureanhydrid gepfropft sein und/oder, wie oben erwähnt nachträglich hydriert oder teilhydriert sein. Typische Vertreter sind die Blockcopolymere Styrol/Butadien oder Styrol/Isopren Kautschuk (SBR und SIS) sowie die (Tri-) Blockcopolymere Styrol/Butadien/Styrol (SBS) oder Styrol/Isopren/Styrol (SIS) Kautschuk, oder Styrol/Ethylen/Butylen/Styrol (SEBS) Kautschuk oder Styrol/Isobutylen/Styrol (SIS) Kautschuk, Styrol/Isobutylen/Styrol (SIBS) Kautschuk, oder Styrol/Ethylen/Propylen/Styrol (SEPS) Kautschuk.

Ganz besonders bevorzugt sind C₁-C₁₀ Alkyl(meth)acrylate als Hauptmonomere; genannt seien insbesondere Methylacrylat, Ethylacrylat, n-Butylacrylat, n-Hexylacrylat, Octylacrylat und 2-Ethylhexylacrylat sowie Mischungen dieser Monomere. Das Emulsionspolymerisat besteht vorzugsweise zu mehr als 40 Gew.-%, insbesondere zu mehr als 60 Gew.-%, besonders bevorzugt zu mehr als 80 Gew.-% aus C₁-C₂₀ Alkyl(meth)acrylaten.

Neben den Hauptmonomeren kann das Polymer weitere Monomere enthalten, z.B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure. Weitere Monomere sind z.B. auch Hydroxylgruppen enthaltende Monomere, insbesondere C₁-C₁₀ Hydroxyalkyl(meth)acrylate, (Meth)acrylamid und Ureidogruppen enthaltende Monomere wie Ureido(meth)acrylate. Als weitere Monomere seien darüber hinaus Phenyloxyethylglycolmono-(meth)acrylat, Glycidylacrylat, Glycidylmethacrylat, Amino(meth)acrylate wie 2-Aminoethyl-(meth)acrylat genannt. Monomere, die außer der Doppelbindung noch weitere funktionelle Gruppen tragen, z.B. Isocyanat-, Amino-, Hydroxy-, Amid- oder Glycidyl-, können z.B. die Haftung auf Substraten verbessern. In Betracht kommen insbesondere auch cyclische Lactame, wie N-Vinylpyrrolidon oder N-Vinylcaprolactam.

Eine weitere Gruppe von erfindungsgemäß in der wässrigen Polymerdispersion dispergierten Polymeren sind Polyurethane, insbesondere bei Raumtemperatur (20 °C) adhäsive Polyurethane. In Betracht kommt vorzugsweise ein Polyurethan, das überwiegend aus Polyisocyanaten, insbesondere Diisocyanaten, und, als Reaktionspartner, Polyesterdiolen, Polyetherdiolen oder deren Gemische aufgebaut ist. Vorzugsweise ist das Polyurethan zu wenigstens 40 Gew.-%, besonders bevorzugt zu wenigstens 60 Gew.-% und ganz besonders bevorzugt zu wenigstens 80 Gew.-% aus Diisocyanaten, Polyetherdiolen und/oder Polyesterdiolen aufgebaut. Bevorzugt enthält das Polyurethan Polyesterdiole in einer Menge von mehr als 10 Gew.-%, besonders bevorzugt größer 30 Gew.-%, insbesondere größer 40 Gew.-% oder größer 50 Gew.-%, ganz besonders bevorzugt größer 60 Gew.-%, bezogen auf das Polyurethan. Insbesondere werden Polyesterdiole als Aufbaukomponenten verwendet. Falls Polyesterdiole im Gemisch mit Polyetherdiolen verwendet werden, handelt es sich vorzugsweise bei wenigstens 50 mol %, besonders bevorzugt bei wenigstens 80 mol %, ganz besonders bevorzugt bei 100 mol % des Gemischs von Polyester-und Polyetherdiolen um Polyesterdiole.

Das Polyurethan ist vorzugsweise aufgebaut aus:
(a) Diisocyanaten,
(b) Diolen, von denen
   b1) 10 bis 100 mol-%, bezogen auf die Gesamtmenge der Diole (b), ein Molekulargewicht von 500 bis 5000 g/mol aufweisen,
   b2) 0 bis 90 mol-%, bezogen auf die Gesamtmenge der Diole (b), ein Molekulargewicht von 60 bis 500 g/mol aufweisen,
(c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
(d) optional weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
(e) optional von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Bei der wässrigen Polymerdispersion bzw. bei dem wässrigen Bindemittel handelt es sich vorzugsweise um einen Klebstoff, besonders bevorzugt um einen Haftklebstoff. Unter dem Begriff Haftklebstoff wird dabei ein bei Raumtemperatur (20 °C) permanent klebriger Klebstoff verstanden. Merkmal eines Haftklebstoffs ist eine ausreichende Adhäsion (Klebrigkeit) verbunden mit einer notwendigen Kohäsion (innere Festigkeit in der Klebstoffschicht).

Eine weitere Gruppe von erfindungsgemäß in der wässrigen Polymerdispersion dispergierten Polymeren sind Polyolefine aus C₂-C₈, C₂-C₆ oder C₂-C₄ einfach ungesättigten Olefinen (Alkenen). Beispielhaft seien Ethen (Ethylen), 1- oder 2-Propen (Propylen) und Buten (1-Buten, 2-Buten, Isobutylen) genannt.

Eine weitere Gruppe von erfindungsgemäß in der wässrigen Polymerdispersion dispergierten Polymeren sind Polyepoxide (Epoxidharze). Dabei handelt es sich um Glycidyl-basierte Epoxidharze (Glycidylether), die durch Umsetzung von Epichlorhydrin mit aliphatischen und aromatischen Dialkoholen erhältlich sind. Geeignete Diole sind Bisphenol A und 1,6-Hexandiol.

Eine weitere Gruppe von erfindungsgemäß in der wässrigen Polymerdispersion dispergierten Polymeren sind Polymilchsäuren (Polylactide) sowie Copolymere der HEMA- und HEA Lactate (Umsetzungsprodukte von Polymilchsäuren mit Hydroxyethylmethacrylat oder Hydroxyethylacrylat) mit (Meth)acrylsäure oder deren C₁-C₈ Alkylestern, wie beispielsweise Methyl(meth)acrylat, Ethyl(meth)acrylat, Propyl(meth)acrylat oder 2-Ethyl-hexyl(meth)acrylat

Die Glasübergangstemperatur (Tg) des Polymers ist bei Klebstoffen im Allgemeinen kleiner oder gleich +15 °C, bei Haftklebstoffen im Allgemeinen vorzugsweise kleiner oder gleich 0 °C. Vorzugsweise beträgt die Tg -65 °C bis +10 °C, besonders bevorzugt -65 °C bis kleiner oder gleich 0 °C, ganz besonders bevorzugt -65 °C bis -10 °C, bzw. -65 °C bis -20 °C. Die Glasübergangstemperatur lässt sich bestimmen durch Differential Scanning Calorimetrie (DSC; ASTM D 3418-08, sogenannte "midpoint temperature").

### Treibmittel enthaltende, thermoplastische Mikrosphären

Weiterhin enthält die wässrige Polymerdispersion ein oder mehrere Treibmittel enthaltende, thermoplastische Mikrosphären. Diese Mikrosphären, die eine thermoplastische Polymerschale und ein darin eingeschlossenes Treibmittel umfassen, sind kommerziell erhältlich zum Beispiel unter der Marke EXPANCEL^{®}.

In solchen Mikrosphären ist das Treibmittel in der Regel eine Flüssigkeit mit einem Siedepunkt nicht höher als die Erweichungstemperatur der thermoplastischen Polymerhülle. Die Erweichungstemperatur der Polymerhülle, normalerweise entsprechend seiner Glasübergangstemperatur Tg, liegt vorzugsweise innerhalb des Bereichs von 0 bis 140 °C, am meisten bevorzugt von 30 bis 100 °C. Beim Erhitzen verdampft das Treibmittel und erhöht dabei den Innendruck und gleichzeitig erweicht die Schale, was zu einer erheblichen Vergrößerung der Mikrosphären führt. Die Temperatur, bei der die Expansion beginnt heißt Tₛₜₐᵣₜ, während die Temperatur, bei der die maximale Ausdehnung erreicht wird, als Tₘₐₓ bezeichnet wird. Tₛₜₐᵣₜ für die Mikrokugeln ist bevorzugt von 40 bis 140 °C, am meisten bevorzugt von 50 bis 100 °C. Tₘₐₓ der Mikrokugeln ist höher als Tₛₜₐᵣₜ und vorzugsweise von 80 bis 200 °C, am meisten bevorzugt von 100 bis 170 °C.

Solche Mikrosphären sind in vielfältiger Form erhältlich, beispielsweise als trockene freifließende Partikel, als wässrige Slurry oder als teilweise entwässerte feuchte Kuchen. Mikrosphären können durch Polymerisieren von ethylenisch ungesättigten Monomeren in Gegenwart eines Treibmittels hergestellt werden. Detaillierte Beschreibungen von verschiedenen geeigneten Mikrosphären und ihrer Herstellung findet sich z.B. in WO 2004/113613, WO 2007/142593 sowie in der dort zitierten Literatur.

Der Gehalt an Mikrosphären in der wässrigen Dispersion beträgt vorzugsweise 0,1 bis 20 Gew.-%, insbesondere von 0,5 bis 10 Gew.-%.

Der Gehalt an in den Mikrosphären eingeschlossenem Treibmittel ist vorzugsweise von 5 bis 50 Gew.-%, oder von 10 bis 50 Gew.-%, von 15 bis 40 Gew.-% und besonders bevorzugt von 20 bis 35 Gew.-%, bezogen auf die Masse der Mikrosphären. Das Treibmittel ist in der Regel eine Flüssigkeit mit einem Siedepunkt nicht höher als die Erweichungstemperatur der thermoplastischen Polymerschale und kann einen oder mehrere Kohlenwasserstoff(e) mit jeweils einem bis 8 Kohlenstoffatomen umfassen, vorzugsweise 3 bis 8 Kohlenstoffatomen. Bevorzugte Kohlenwasserstoffe sind ausgewählt aus der Gruppe bestehend aus Propan, n-Pentan, Isopentan, Neopentan, Butan, Isobutan, Hexan, Isohexan, Neohexan, Heptan, Isoheptan, Octan oder Isooctan oder Mischungen davon umfassen. Abgesehen davon können auch andere Kohlenwasserstofftypen verwendet werden, wie Petrolether, oder chlorierte oder fluorierte Kohlenwasserstoffe, wie Methylchlorid, Methylenchlorid, Dichlorethan, Dichlorethylen, Trichlorethan, Trichlorethylen, Trichlorfluormethan, perfluorierte Kohlenwasserstoffe usw. Bevorzugte Treibmittel umfassen Isobutan, allein oder in Mischung mit einem oder mehreren anderen der obengenannten Kohlenwasserstoffe. Der Siedepunkt bei Normaldruck liegt vorzugsweise im Bereich von etwa -50 °C bis etwa 100 °C, am meisten bevorzugt von etwa -20 °C bis etwa 50 °C, insbesondere von etwa -20 °C bis etwa 30 °C.

Die Partikelgröße der Mikrosphären, dargestellt als Volumenmedian D(0,5), beträgt vorzugsweise von 1 µm oder mehr bis 500 µm oder weniger, vorzugsweise von 5 µm oder mehr bis 100 µm oder weniger oder von 5 µm oder mehr bis 40 µm oder weniger. Die Partikelgröße kann bestimmt werden z.B. durch Laserlichtstreuung.

Die Mikrosphären können in verschiedenen Applikationsformen der Polymerdispersion zugesetzt werden. Beispielsweise in getrockneter Form mit einem Feststoffgehalt von vorzugsweise größer 95 Gew.-% oder in nicht vollständig getrockneter, feuchter Form mit einem Feststoffgehalt von vorzugsweise 55 Gew.-% oder mehr bis 85 Gew.-% oder weniger oder in Form einer wässrigen Aufschlämmung (slurry) mit einem Feststoffgehalt von vorzugsweise 5 bis 55 Gew.-% oder von 35 bis 50 Gew.-%.

Die thermoplastische Polymerhülle der Mikrokugeln kann aus einem oder mehreren Homo-oder Copolymeren gebildet werden, die durch Polymerisieren von ethylenisch ungesättigten Monomeren erhältlich sind. Hierfür geeignete Monomere sind z.B. Acrylsäureester, wie Methylacrylat oder Ethylacrylat; Methacrylsäureester wie Methylmethacrylat, Isobornylmethacrylat oder Ethylmethacrylat; Nitrilgruppen enthaltende Monomere, wie Acrylnitril, Methacrylnitril, alpha-Chloracrylnitril, alpha-Ethoxyacrylnitril, Fumaronitril oder Crotonitril; Vinylhalogenide wie Vinylchlorid; Vinylester wie Vinylacetat; Vinylpyridin; Vinylidenhalogenide, wie Vinylidenchlorid; Styrole wie Styrol, halogenierte Styrole oder alpha-Methylstyrol; Diene, wie Butadien, Isopren oder Chloropren; Vinylether, insbesondere solche mit nur einer C-C-Doppelbindung. Beispiele von Vinylethern beinhalten Alkylvinylether, die Alkylgruppe bevorzugt mit 1 bis 10 C-Atomen, am meisten bevorzugt von 1 bis 5 C-Atomen, z.B. Methylvinylether, Ethylvinylether, Propylvinylether, Isopropylvinylether, Butylvinylether, Isobutylvinylether, tert-Butylvinylether, sec.-Butylvinylether und deren Mischungen, von denen Methylvinylether und Ethylvinylether besonders bevorzugt sind. Ein oder mehrere Wasserstoffatom(e) an der Alkylgruppe kann mit wenigstens einer funktionellen Gruppe, wie Hydroxy, Carbonsäure, Amin, Ether etc. substituiert sein, z.B. Ethylenglycolvinylether. Beliebige Gemische der oben genannten Monomeren können ebenfalls verwendet werden.

Vorzugsweise umfassen die Monomere wenigstens ein (Meth)acrylsäureester-Monomer, am meisten bevorzugt wenigstens einen Methacrylsäureester, wie Methylmethacrylat. Die Menge davon in der Polymerhülle ist vorzugsweise von etwa 0,1 Gew.-% oder mehr bis etwa 80 Gew.-% oder weniger, am meisten bevorzugt von etwa 1 bis etwa 25 Gew.-% der Gesamtmenge der Monomeren. Vorzugsweise umfassen die Monomere auch wenigstens ein Vinylidenhalogenid, am meisten bevorzugt Vinylidenchlorid. Die Menge davon in der Polymerhülle ist vorzugsweise von etwa 1 bis etwa 90 Gew.-%, am meisten bevorzugt von etwa 20 bis etwa 80 Gew.-% der Gesamtmenge der Monomeren. Am meisten bevorzugt umfassen die Monomere sowohl wenigstens ein (Meth)acrylester-Monomer und wenigstens ein Vinylidenhalogenid-Monomer. Vorzugsweise umfassen die Monomere wenigstens ein Nitril enthaltendes Monomer, am meisten bevorzugt wenigstens eines ausgewählt aus Acrylnitril und Methacrylnitril, insbesondere Acrylnitril. Die Menge davon in der Polymerhülle ist vorzugsweise von etwa 1 bis etwa 80 Gew.-%, am meisten bevorzugt von etwa 20 Gew.-% oder mehr bis etwa 70 Gew.-% oder weniger der Gesamtmenge der Monomeren.

In einer vorteilhaften Ausführungsform umfassen die Monomere wenigstens ein Acrylester-Monomer, wenigstens ein Vinylidenhalogenid und wenigstens ein Nitril enthaltendes Monomer. Das Polymer der Schale kann z.B. ein Copolymer sein, erhältlich aus Monomeren umfassend Methylmethacrylat in einer bevorzugten Menge von etwa 0,1 Gew.-% oder mehr bis etwa 80 Gew.-% oder weniger, am meisten bevorzugt von etwa 1 Gew.-% oder mehr bis etwa 25 Gew.-% oder weniger der Gesamtmenge der Monomere, Vinylidenchlorid in einer bevorzugten Menge von etwa 1 Gew.-% oder mehr bis etwa 90 Gew.-% oder weniger, am meisten vorzugsweise von etwa 20 Gew.-% oder mehr bis etwa 80 Gew.-% oder weniger der Gesamtmenge der Monomeren und Acrylnitril in einer bevorzugten Menge von etwa 1 bis etwa 80 Gew.-%, am meisten bevorzugt von etwa 20 bis etwa 70 Gew.-% der Gesamtmenge der Monomeren. Für die Polymerhülle geeignet sind auch Copolymere aus Monomeren umfassend 20 bis 80 Gew.-% Acrylnitril und 1 bis 70 Gew.-% Vinylether mit nur einer C-C-Doppelbindung, wobei die Gesamtmenge des Acrylnitrils und des Vinylethers von 30 bis 100 Gew.-%, vorzugsweise von 50 bis 100 Gew.-% oder von 65 bis 100 Gew.-% der ethylenisch ungesättigten Monomere beträgt. Die ethylenisch ungesättigten Monomere umfassen vorzugsweise von 1 bis 60 Gew.-%, 1 bis 50 Gew.-%, 5 bis 50 Gew.-% oder 5 bis 30 Gew.-% Vinylether mit nur einer C-C-Doppelbindung sowie vorzugsweise von 40 bis 80 Gew.-%, am meisten bevorzugt von 50 bis 70 Gew.-% Acrylnitril sowie vorzugsweise ferner Methacrylnitril, bevorzugt in einer Menge von 1 bis 50 Gew.-%, am meisten bevorzugt von 5 bis 40 Gew.-% ist, und vorzugsweise ferner einen oder mehrere Ester der Acrylsäure, Ester der Methacrylsäure und Mischungen davon, bevorzugt in einer Menge von 1 bis 50 Gew.-%, vorzugsweise von 5 bis 40 Gew.-%.

Vorzugsweise ist die Schale der Mikrosphären gebildet aus einem Copolymer aus ethylenisch ungesättigten Monomeren umfassend wenigstens ein Monomer ausgewählt aus (Meth)acrylsäureester-Monomeren, Vinylidenhalogenid-Monomeren, Acrylnitril und Vinylether-Monomeren. Besonders bevorzugt sind Copolymere aus Monomeren umfassend Alkyl(meth)acrylat (z.B. Methylacrylat, Ethylacrylat, n-Butylacrylat, n-Hexylacrylat, Octylacrylat und 2-Ethylhexylacrylat sowie Mischungen dieser Monomere), Vinylidenchlorid und Acrylnitril oder Copolymere aus Monomeren umfassend wenigstens ein Vinylether-Monomer und Acrylnitril.

Die Monomere für die Polymerhülle können auch vernetzende multifunktionelle Monomere umfassen, wie z.B. Divinylbenzol, Ethylenglycoldi(meth)acrylat, Di(ethylenglycol)di(meth)acrylat, Triethylenglycoldi(meth)acrylat, Propylen-glycoldi(meth)acrylat, 1,4-Butandiol-di(meth)acrylat, 1,6-Hexandiol-di(meth)-acrylat, Glycerindi(meth)acrylat, 1,3-Butandiol-di(meth)acrylat, Neopentyl-glycoldi(meth)acrylat, 1,10-Decandiol(meth)acrylat, Pentaerythrit-tri(meth)-acrylat, Pentaerythrit-tetra(meth)acrylat, Dipentaerythritolhexa(meth)acrylat, Triallylformal-tri(meth)acrylat, Allyl(meth)acrylat, Trimethylolpropantri(meth)-acrylat, Tributanediol-di(meth)acrylat, PEG-200-di(meth)acrylat, PEG-400-di(meth)acrylat, PEG-600-di(meth)acrylat, 3-Acryloyloxyglycolmonoacrylat, Triacrylformal, Triallylisocyanat, Triallylisocyanurat, Divinylether, Ethylenglycol-divinylether, Diethylenglycoldivinylether, Triethylenglycoldivinyl-ether, Tetraethylenglycoldivinylether etc. Besonders bevorzugte vernetzende Monomere sind wenigstens trifunktionell, z.B. Pentaerythrittri(meth)acrylat, Penta-erythrittetra(meth)acrylat, Dipentaerythritolhexa(meth)acrylat, Triallyl-formal-tri-(meth)acrylat, Trimethylolpropan-tri(meth)acrylat, Triacryl-formal, Triallylisocyanat und Triallylisocyanurat. Die Menge an vernetzenden funktionellen Monomeren kann z.B. von 0,1 Gew.-% oder mehr bis 10 Gew.-% oder weniger, oder 0,1 Gew.-% oder mehr bis 1 Gew.-% oder weniger, oder 0,2 bis 0,5 Gew.-%; bzw. von 1 bis 3 Gew.-% der ethylenisch ungesättigten Monomeren sein, wobei 0,1 bis 1 Gew.-% insbesondere bei wenigstens trifunktionellen Monomeren bevorzugt ist und 1 bis 3 Gew.-% bei difunktionellen Monomeren bevorzugt ist.

Abgesehen von der Polymerhülle und dem Treibmittel können die Mikrosphären weitere Stoffe umfassen, die z.B. während ihrer Herstellung zugesetzt wurden; in der Regel in einer Menge von 0 Gew.-% oder mehr bis 20 Gew.-% oder weniger, vorzugsweise von 1 Gew.-% oder mehr bis 10 Gew.-% oder weniger. Beispiele solcher Substanzen sind feste Suspensionsmittel, wie beispielsweise eine oder mehrere Stoffe ausgewählt aus Stärke, vernetzte Polymere, Gummi agar, derivatisierte Cellulose, wie z.B. Methylcellulose, Hydroxypropylmethylcellulose, Carboxymethylcellulose und Hydroxyethylcellulose, Kieselsäure, kolloidale Tone wie beispielsweise Kreide und Bentonit, und/oder ein oder mehrere Salze, Oxide oder Hydroxide von Metallen wie AI, Ca, Mg, Ba, Fe, Zn, Ni und Mn, z.B. ein oder mehrere Stoffe ausgewählt aus Calciumphosphat, Calciumcarbonat, Magnesiumhydroxid, Bariumsulfat, Calciumoxalat und Hydroxiden von Aluminium, Eisen, Zink, Nickel oder Mangan. Falls vorhanden, sind diese festen Suspendiermittel normalerweise hauptsächlich an der äußeren Oberfläche der Polymerschale angeordnet.

Vorzugsweise sind die Mikrosphären dadurch gekennzeichnet, dass die Mikrosphären eine Schale aus thermoplastischem Polymer und darin eingeschlossenem Treibmittel, vorzugsweise Isobutan, aufweisen, wobei in den Mikrosphären vorzugsweise 17 bis 40 Gew.-% Treibmittel eingeschlossen ist und die Mikrosphären eine Partikelgröße (Volumenmedian D(0,5)) von 5 µm oder mehr bis 40 µm oder weniger aufweisen.

### Polyole, Polyamine und thermoplastisches Polymer

Die wässrige Polymerdispersion umfasst weiterhin wenigstens eine zusätzliche Komponente, die ausgewählt ist aus der Gruppe bestehend aus Polyolen, Polyaminen und thermoplastischen Polymeren, die ausgewählt sind aus der Gruppe bestehend aus Polyamid, Polyester und Polystyrol.

Der Gewichtsanteil der zusätzlichen Komponente in der Polymerdispersion beträgt vorzugsweise 1 Gew.-% oder mehr bis 15 Gew.-% oder weniger, 1 Gew.-% oder mehr bis 8 Gew.-% oder weniger, oder 1 Gew.-% oder mehr bis 5 Gew.-% oder weniger.

Geeignete Polyole sind zum Beispiel (Poly-) Propylenglycol, (Poly-) Ethylenglycol, Glycerin und Stärke. Geeignete Polyamine sind zum Beispiel Harnstoff. Die thermoplastischen Polymere sind ausgewählt aus der Gruppe bestehend aus Ethylenvinylacetat, Polyamid, Polyester, Polyethylen, Polypropylen, Polystyrol, Styrol-enthaltenden Copolymeren und Ethylen/Propylen-Copolymeren. Ethylenvinylacetat (EVA) ist als zusätzliche Komponente bevorzugt. Das Ethylenvinylacetat kann einen Vinylacetat-Anteil von bis zu 28 Gew.-%, vorzugsweise wenigstens 14 Gew.-% aufweisen.

Das Ethylenvinylacetat (EVA) kann einen Vinylacetat-Anteil von bis zu 28 Gew.-% aufweisen. Besonders bevorzugt sind Harnstoff, EVA (z.B. in Form von EVA Pulver), Stärke und Glycerin.

Überraschenderweise wurde gefunden, dass die Verwendung solcher zusätzlicher Komponenten die Anzugsgeschwindigkeit bei der Verklebung deutlich erhöht.

Die Verwendung dieser Stoffe zur Formulierung von klassischen Dispersionsklebstoffen auf Polyvinylacetat- (PVAc), Vinylacetatethylen- (VAE; auch "Ethylenvinylacetat" bzw. "EVA" genannt) oder Acrylatbasis ist nicht neu, jedoch wird in diesen Systemen zumeist eine Wasserretardierung und damit eine verminderte Trocknung und Anzugsgeschwindigkeit beobachtet.

Im erfindungsgemäßen System ist der Effekt jedoch genau umgekehrt. Auf allen getesteten Substratkombinationen kommt es zu einer deutlichen Steigerung der Anzugsgeschwindigkeit. Dies ist auf eine Verbesserung der Wasserausschleusung aus dem Dispersionsstrang zurückzuführen.

Überraschenderweise wurde ebenfalls gefunden, dass ein Anteil von typischerweise in solchen Systemen verwendeten Tackifiern in der Dispersion oder der Formulierung die Anzugsgeschwindigkeit der Basisdispersion herabsetzen kann, was aber durch den Zusatz von Polyolen, Polyaminen oder EVA wieder ausgeglichen werden kann.

Überraschenderweise wurde auch gefunden, dass der Zusatz von Stärke zur Dispersion die Strangqualität bei der Ausbringung in idealer Weise verbessert, jedoch zu einer Verminderung der Anzugsgeschwindigkeit führt. Dies ist erstaunlich, da die Prozesstemperaturen über der Verkleisterungstemperatur handelsüblicher Stärken liegen. Erneut kann die Anzugsgeschwindigkeit durch Hilfsmittel, wie Harnstoff oder ähnliches wieder verbessert werden.

Überraschenderweise wurde ferner gefunden, dass die Einbringung von gepulvertem EVA (Ethylen/Vinylacetat-Copolymer) in die Dispersion die Anzugsgeschwindigkeit ebenfalls signifikant gegenüber dem Ausgangswert steigert.

In einer bevorzugten Ausgestaltung der Erfindung ist das dispergierte Polymer (i) ausgewählt aus der Gruppe bestehend aus Polyacrylat, Polystyrolacrylat und Polyurethan und die zusätzliche Komponente (iii) ist Ethylenvinylacetat. Weiterhin ist bevorzugt, dass die wässrige Dispersion Polyacrylat als dispergiertes Polymer (i) und Ethylenvinylacetat als zusätzliche Komponente (iii) umfasst. Die obigen Ausführungen zu den einzelnen Komponenten und deren Anteilen sind auch für diese bevorzugten Ausgestaltungen anwendbar.

### Zusätzliche Additive

Die wässrige Polymerdispersion kann ausschließlich aus (i) dem in wässriger Phase dispergierten Polymer, (ii) den Mikrosphären und (iii) wenigstens einer zusätzlichen Komponente, die ausgewählt ist aus der Gruppe bestehend aus Polyolen, Polyaminen oder thermoplastischen Polymeren, die ausgewählt sind aus der Gruppe bestehend aus Polyamid, Polyester und Polystyrol, bestehen. Die Polymerdispersion kann aber auch noch weitere, von den zusätzlichen Komponenten unterschiedliche Additive enthalten.

Als Additive in Betracht kommen bei Haftklebstoffen z.B. sogenannte klebrigmachende Harze (Tackifier). Tackifier sind z.B. Naturharze, wie Kolophoniumharze und deren durch Disproportionierung oder Isomerisierung, Polymerisation, Dimerisierung, Hydrierung entstehenden Derivate. Die Säuregruppen dieser Harze können in ihrer Salzform (mit z.B. ein- oder mehrwertigen Gegenionen) oder bevorzugt in ihrer veresterten Form vorliegen. Alkohole, die zur Veresterung verwendet werden, können ein- oder mehrwertig sein. Beispiele sind Methanol, Ethandiol ("Glycol"), Diethylenglycol, Triethylenglycol, 1,2,3-Propantriol, Pentaerythrit.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Weitere Zusätze zur Erhöhung der Klebrigkeit (Tackifier) sind niedermolekulare Polymere, wie z.B. säurehaltige Polyacrylate mit Glastemperaturen im Bereich von -60 °C bis -20 °C. Die als Tackifier verwendbaren niedermolekularen Polymere haben ein gewichtsmittleres Molekulargewicht von vorzugsweise 500.000 oder weniger, vorzugsweise von 1.500 oder mehr bis 45.000 oder weniger oder von 2.000 oder mehr bis 20.000 oder weniger und können beispielsweise in Form eines 100 %-Systems zu der Polymerdispersion zugegeben werden. Die Tackifier sind vorzugsweise in Mengen von 1 Gew.-% oder mehr bis 40 Gew.-% oder weniger, insbesondere von 5 Gew.-% oder mehr bis 30 Gew.-% in der wässrigen Polymerdispersion enthalten.

Weitere Additive, welche in der wässrigen Dispersion enthalten sein können, sind zum Beispiel Antioxidantien, Füllstoffe, Farbstoffe, Verlaufshilfsmittel und Weichmacher und Netzmittel.

Geeignete Netzmittel sind zum Beispiel Sulfosuccinate, insbesondere Sulfobernsteinsäurealkylester (Methyl-, Ethyl-, Propyl-, Butyl-, Pentyl-, Hexyl- und Isooctylester). Diese werden zur Senkung der Oberflächenspannung der Dispersion eingesetzt und führen zu einer besseren Benetzung der Substrate, welche verklebt werden sollen.

### Polymerdispersion

Bevorzugte Polymerdispersionen sind dadurch gekennzeichnet, dass der Gehalt an dispergiertem Polymer in der Polymerdispersion von 20 Gew.-% oder mehr bis 75 Gew.-% oder weniger, vorzugsweise 40 Gew.-% oder mehr bis 70 Gew.-% oder weniger beträgt, der Gehalt an den Mikrosphären in der Polymerdispersion von 0,1 Gew.-% oder mehr bis 20 Gew.-% oder weniger, vorzugsweise 0,5 Gew.-% oder mehr bis 10 Gew.-% oder weniger beträgt und der Gesamtfeststoffgehalt der wässrigen Polymerdispersion 30 Gew.-% oder mehr bis 80 Gew.-% oder weniger, vorzugsweise 40,5 Gew.-% oder mehr bis 80 Gew.-% oder weniger oder 45 Gew.-% oder mehr bis 75 Gew.-% oder weniger beträgt. Das entspricht einem Wassergehalt von 20 Gew.-% oder mehr bis 70 Gew.-% oder weniger, bzw. von 20 Gew.-% oder mehr bis 59,5 Gew.-% oder weniger bzw. von 25 Gew.-% oder mehr bis 55 Gew.-% oder weniger.

Die Viskosität der Beschichtungsmasse vor Koagulation beträgt insbesondere wenigstens 20 mPas oder mehr oder 50 mPas oder mehr bis 3000 mPas oder weniger, besonders bevorzugt 100 mPas oder mehr bis 2000 mPas oder weniger. Viskositäten werden nach DIN EN ISO 3219 (23 °C, 250 1/s) gemessen.

### Koagulation

Zum Induzieren der Koagulation erfolgt bei den oben beschriebenen wässrigen Polymerdispersionen ein Energieeintrag. Vorzugsweise erfolgt der Energieeintrag zur Koagulation thermisch und/oder mechanisch und/oder durch Ultraschall.

Besonders bevorzugt ist die Kombination des thermischen mit dem mechanischen Energieeintrag, also eine gleichzeitige Erwärmung und Scherung. Die Erwärmung erfolgt vorzugsweise auf eine Temperatur von 50 °C oder mehr bis 150 °C oder weniger, vorzugsweise 60 °C oder mehr bis 110 °C oder weniger. Dabei ist die Temperatur größer oder gleich Tₛₜₐᵣₜ der Mikrosphären. Das Erwärmen kann erfolgen durch den Durchfluss durch eine beheizbare Ausbringöffnung, insbesondere durch eine beheizbare Düse oder durch das Einleiten von erwärmten Gasen, insbesondere von erwärmter Luft oder von Wasserdampf.

Bei Scherung sind die Scherraten vorzugsweise in einem Bereich von 100 1/s oder mehr bis 500.000 1/s oder weniger. Die Scherung kann erfolgen durch das Durchleiten durch einen Mikrokanal mit Durchmessern von vorzugsweise 0,5 bis 10 mm.

Die Erfindung betrifft daher auch ein Koagulat, welches durch thermische und/oder mechanische und/oder Ultraschall-initiierte Koagulation der erfindungsgemäßen wässrigen Polymerdispersion erhältlich ist.

Das Koagulat ist vorzugsweise erhältlich durch thermisch initiierte Koagulation der erfindungsgemäßen wässrigen Polymerdispersion durch deren Erwärmen auf eine Temperatur von 50 °C oder mehr bis 150 °C oder weniger, vorzugsweise 60 °C oder mehr bis 110 °C oder weniger, und/oder mechanische Koagulation durch Scherung der erfindungsgemäßen wässrigen Polymerdispersion mit Scherraten von 100 1/s oder mehr bis 500000 1/s oder weniger.

### Verklebung von Substraten

Die vorliegende Erfindung betrifft auch einen Klebstoff umfassend oder ausschließlich bestehend aus dem oben erwähnten Koagulat, sowie ein Substrat, welches ganz oder teilweise beschichtet mit dem Koagulat bzw. dem Klebstoff beschichtet ist.

Das beschichtete Substrat ist vorzugsweise ausgewählt aus der Gruppe bestehend aus Papier, Pappe, Karton, Holz, Stein, Beton, Non-Woven aus künstlichen und/oder natürlichen Fasern, gewebten Textilien aus künstlichen und/oder natürlichen Fasern, offenporigen oder geschlossen-porigen Polymerschaumstoffen, insbesondere bestehend aus Polyurethan, Polyester, Polyethylen, Polypropylen und Polystyrol, oder Kompositen der vorgenannten Substrate, beispielweise mit Kunststoffen. Auch Naturstoffe und Komposite dieser mit Kunststoffen sind geeignete Substrate.

Das Koagulat, welches durch thermische und/oder mechanische und/oder Ultraschall-initiierte Koagulation einer wässrigen Polymerdispersion erhältlich ist, wird dabei auf wenigstens ein Substrat aufgetragen. Hierzu wird wenigstens ein Substrat mit erfindungsgemäßem Koagulat beschichtet. Vorzugsweise handelt es sich bei der Polymerdispersion um eine Klebstoffdispersion. Vorzugsweise wird das Koagulat in Strangform auf wenigstens ein Substrat aufgetragen. Vorzugsweise erfolgt das Auftragen des Koagulats mit einer Düse. Die Beschichtung erfolgt im Falles eine bahnartigen Beschichtung vorzugsweise in einem kontinuierlichen Prozess, im Falle beispielsweise eines Kartonverschlusses als diskontinuierlicher Prozess. Bei den Substraten bzw. den Trägermaterialien kann es sich vorzugsweise um Papier, Pappe oder Karton handeln. Das beschichtete Substrat wird sodann mit dem zu verbindendem, ebenfalls mit dem Klebstoff beschichteten oder unbeschichteten anderen Substrat verbunden.

In einem bevorzugten Verfahren wird das Koagulat auf einen verschließbaren Bereich einer Kartonverpackung aufgetragen und anschließend die Kartonverpackung mittels der aufgetragenen, koagulierten Klebstoffdispersion verschlossen.

Vorzugsweise wird die wässrige Dispersion in das Auftragsgerät gefördert. Dort wird es durch den Trigger, wie zum Beispiel Temperatur, Scherung oder Druck, in ein Koagulat überführt (Verfestigung), welches als fester Strang aus der Austrittsöffnung, z.B. einer Kapillare oder Düse austritt. Dieser feste Strang enthält das Dispersionswasser fein verteilt in seinem Inneren. Bei der Fügung der Substrate tritt das Wasser aus den Strangporen aus und wird an das Substrat/die Umgebung abgegeben.

Gegenstand der Erfindung sind auch beschichtete Substrate, erhältlich durch das oben beschriebene Verfahren zur Beschichtung von Substraten mit einer koagulierten Polymerdispersion.

Überraschenderweise wurde ferner gefunden, dass die erfindungsgemäße koagulierte Dispersion zusätzlich zur Klebung von Papieren oder Kartonagen geeignet ist, sondern in idealer Weise ebenfalls folienkaschierte oder beschichtete Oberflächen zu kleben (z.B. HDPE Coating, OPP, PET, PS). Vorzugsweise ist zumindest eine saugfähige Gegenoberfläche vorhanden, da der koagulierte Dispersionsstrang noch eingeschlossenes Wasser aufweist, welches für die Klebung förderlich ist.

Die erfindungsgemäßen koagulierten Polymerdispersionen sind ferner auf dem Gebiet der Buchbinderei, insbesondere bei der Buchblockleimung verwendbar. Ein weiteres Anwendungsgebiet der erfindungsgemäßen koagulierten Polymerdispersionen liegt im Plissieren und in der Rahmenverklebung von Filtermedien. Die erfindungsgemäßen koagulierten Polymerdispersionen können außerdem als Bindemittel bei 3D-Druck Verfahren Anwendung finden.

Gegenüber Hotmelts hat die koagulierte erfindungsgemäße Dispersion den Vorteil, dass sie einen höheren Wärmestand (z.B. etwa 200 °C gegenüber etwa 70 °C) sowie eine sehr gute Kältebeständigkeit (Materialbruch bei etwa - 20 °C, etwa -40 °C) aufweist. Dabei hat die Verwendung von Tackifier bei der Klebung von Kraftliner keinen Einfluss auf den Wärmestand.

Durch das erfindungsgemäße Koagulat und das erfindungsgemäße Verfahren ergeben sich insbesondere die folgenden Vorteile:
Durch die Koagulation der Polymerdispersion erfolgt ein schneller Aufbau der Klebkräfte, der im Bereich derjenigen von Hotmelt-Systemen liegt. Über konventionelle Auftragssysteme von wässrigen (Haft-) Klebstoffdispersionen ist dies nicht möglich, so dass Haftklebstoffdispersionen bisher nicht im Kartonverschluss angewendet werden können.

Die erfindungsgemäße wässrige Polymerdispersion kann somit zur Herstellung von Koagulaten verwendet werden durch thermische und/oder, mechanische und/oder Ultraschall-initiierte Koagulation. Das erfindungsgemäße Koagulat kann als Klebstoff verwendet werden, d.h. zum Verkleben/Verbinden von Substraten (Werkstoffen, Fügeteilen), insbesondere zum Verkleben von Papier, Kartonagen und Buchblöcken sowie bei der Herstellung von Filtermedien. Beispielhaft seien als geeignete Filtermedien solche aus Polyester-Vlies, Polypropylen-Vlies sowie Kombinationen aus Polyester-Vlies mit Aktivkohle oder Polypropylen-Vlies mit Aktivkohle genannt.

Das erfindungsgemäße Koagulat kann ferner als Bindemittel bei 3D-Druck Verfahren verwendet werden. Beim 3D-Druck werden dreidimensionale Werkstücke schichtweise aufgebaut. Der Aufbau erfolgt computergesteuert aus einem oder mehreren flüssigen oder festen Werkstoffen nach vorgegebenen Maßen und Formen (CAD). Beim Aufbau finden physikalische oder chemische Härtungs- oder Schmelzprozesse statt. Typische Werkstoffe für das 3D-Drucken sind Kunststoffe, Kunstharze, Keramiken und Metalle. Der 3D-Druck ist ein generatives beziehungsweise additives Fertigungsverfahren. Es wird auf den bekannten Stand der Technik verwiesen.

Die Erfindung wird durch die nachfolgenden Bespiele näher beschrieben.

### Beispiele

Die erfindungsgemäße koagulierbare wässrige Dispersion (z.B. selbstvernetzende Styrolacrylat-Dispersion Acronal 5044 modifiziert mit 2 bis 8 Gew.-% zusätzliche Komponente und ggf. Tackifier) wurde mittels einer peristaltisch arbeitenden Pumpe aus einem Vorratsgefäß gefördert, in eine beheizbare Kapillare (Innendurchmesser etwa 1 mm, Länge etwa 240 mm, beheizbare Strecke etwa 150 mm) geleitet und am Kapillarausgang auf eine Papier oder Kartonoberfläche appliziert (überwiegend Kraftliner weiß, Type BE 73W, 135 g/m²). Das so erhaltene Substrat wurde sofort nach Applikation in einer speziellen Vorrichtung mit einem Gegensubstrat überdeckt und der Verbund für variierende Zeitabstände gepresst (Kniehebelpresse). Nach Beenden des Pressvorgangs erfolgte direkt eine Zerstörungsprüfung der Klebung durch ruckartiges Auseinanderziehen der Substrate. Kernkriterium für eine stabile Klebung ist ein Faserriss im Kraftlinermaterial.

**Tabelle 1: Anzugsgeschwindigkeiten [sec] in Abhängigkeit von der Additivzugabe. Testsubstrat Kraftliner.**

| ***Dispersion*** | ***Modifizierung*** | ***AZG Kraftliner weiß*/*weiß*** | ***AZG Kraftliner weiß*/*braun*** | ***AZG Kraftliner braun*/*braun*** |
|---|---|---|---|---|
| Acrylat Dispersion mit Tackifier | keine | 50 | 30 | 30 |
| Acrylat Dispersion mit Tackifier | Harnstoff | 5 - 10 | 10 | 20 |
| Acrylat Dispersion mit Tackifier | EVA-Pulver | 20 | 20 | 25 |
| Acrylat Dispersion ohne Tackifier | keine | 30 | 30 | 20 |
| Acrylat Dispersion ohne Tackifier | Harnstoff | 5 - 10 | 15 | 15 |
| Acrylat Dispersion ohne Tackifier | Glycerin | 5 - 10 | 5 - 10 | 20 - 30 |

**Tabelle 2: Anzugsgeschwindigkeit [sec] bei Folienkaschierten Testsubstraten: Kraftliner und Folienkaschierter Kraftliner (PET, PS, HDPE Coating).**

| ***Dispersion*** | ***Modifizierung*** | ***Kraftliner weiß* / *PET-Folie*** | ***Kraftliner weiß* / *PS-Folie*** | ***Kraftliner weiß* / *HDPE Coating*** |
|---|---|---|---|---|
| Acrylat Dispersion ohne Tackifier | Harnstoff | 5 sec | 5 sec | 20 |

Bestimmung des Wärmestands bei Kraftliner-Verbunden:
Auf einem Kraftliner mit einer Abmessung von 5 cm x 4 cm wird mittels einer Kapillare die koagulierte Dispersion aufgebracht und sofort mit einem weiteren Kraftliner derselben Abmessung abgedeckt. Die geklebte Fläche wird für 30 sec gepresst und über Nacht bei Raumtemperatur konditioniert. Der Prüfkörper wird in einem Trocken befestigt und an einer Substratseite mit einem Gewicht (m = 200 g) beschwert. Nachfolgend wird die Temperatur stufenweise erhöht (10 °C/10 min).

| ***Dispersion*** | ***Modifizierung*** | ***AZG Kraftliner weiß*/*weiß*** | ***AZG Kraftliner weiß*/*braun*** | ***AZG Kraftliner braun*/*braun*** |
|---|---|---|---|---|
| Acrylat Dispersion mit Tackifier | Harnstoff | Abbruch bei 200 °C | Abbruch bei 200 °C | Abbruch bei 200 °C |
| Acrylat Dispersion ohne Tackifier | Harnstoff | Abbruch bei 200 °C | Abbruch bei 200 °C | Abbruch bei 200 °C |

## Patentansprüche

1. Koagulat erhältlich durch thermische und/oder mechanische und/oder Ultraschall-initiierte Koagulation einer wässrigen Polymerdispersion umfassend
(i) wenigstens ein in wässriger Phase dispergiertes Polymer ausgewählt aus der Gruppe bestehend aus Polyurethan, Vinylacetat/Ethylen-Copolymeren, Polyvinylacetat (PVAc), Polyacrylat, Polystyrolacrylat, Styrol/Butadien-(Block-) Copolymer, Styrol/Isopren-(Block-) Copolymer, Polyisopren-Copolymer, Polychloropren, Polyolefin Homopolymere und Copolymere aus C₂-C₈ Alkenen, Polyepoxid und Polymilchsäure,
(ii) ein Treibmittel enthaltende, thermoplastische Mikrosphären, und
(iii) wenigstens eine zusätzliche Komponente, die ausgewählt ist aus der Gruppe bestehend aus Polyolen, Polyaminen und thermoplastischen Polymeren, die ausgewählt sind aus der Gruppe bestehend aus Polyamid, Polyester und Polystyrol.

2. Koagulat gemäß Anspruch 1, **dadurch gekennzeichnet, dass** das Polyol ausgewählt ist aus der Gruppe bestehend aus (Poly-) Propylenglycol, (Poly-) Ethylenglycol, Glycerin und Stärke, das Polyamin Harnstoff ist und die thermoplastischen Polymere ausgewählt sind aus der Gruppe bestehend aus Polyamid, Polyester und Polystyrol.

3. Koagulat gemäß einem oder mehreren der vorhergehenden Ansprüche, **dadurch gekennzeichnet, dass** sie durch Energieeintrag koaguliert, vorzugsweise durch thermischen und/oder mechanischen Energieeintrag und/oder durch Einwirkung von Ultraschall.

4. Koagulat gemäß einem oder mehreren der vorhergehenden Ansprüche, **dadurch gekennzeichnet, dass** der Gehalt an dispergiertem Polymer in der Polymerdispersion von 20 Gew.-% oder mehr bis 75 Gew.-% oder weniger beträgt, der Gehalt an den Mikrosphären in der Polymerdispersion von 0,1 Gew.-% oder mehr bis 20 Gew.-% oder weniger beträgt und der Gesamtfeststoffgehalt der wässrigen Polymerdispersion vorzugsweise 30 Gew.-% oder mehr bis 80 Gew.-% oder weniger beträgt.

5. Koagulat gemäß einem oder mehreren der vorhergehenden Ansprüche, **dadurch gekennzeichnet, dass** der Gehalt an zusätzlicher Komponente in der Polymerdispersion 1 Gew.-% oder mehr bis 15 Gew.-% oder weniger, 1 Gew.-% oder mehr bis 8 Gew.-% oder weniger, oder 2 Gew.-% oder mehr bis 5 Gew.-% oder weniger beträgt.

6. Koagulat gemäß einem oder mehreren der vorhergehenden Ansprüche, **dadurch gekennzeichnet, dass** die Mikrosphären eine Schale aus thermoplastischem Polymer und darin eingeschlossenem Treibmittel, vorzugsweise umfassend einen oder mehrere Kohlenwasserstoff(e), der/die einen Kohlenstoff oder mehr bis acht Kohlenstoffe oder weniger, aufweist/aufwiesen, wobei die Mikrosphären in nicht expandiertem Zustand eine Partikelgröße mit einem Volumenmedian D(0,5) von 5 µm oder mehr bis 40 µm oder weniger aufweisen.

7. Koagulat gemäß einem oder mehreren der vorhergehenden Ansprüche, **dadurch gekennzeichnet, dass** die Schale der Mikrosphären gebildet ist aus einem Copolymer aus ethylenisch ungesättigten Monomeren umfassend mindestens ein Monomer ausgewählt aus (Meth)acrylsäureester-Monomeren, Vinylidenhalogenid-Monomeren, Acrylnitril und Vinylether-Monomeren, insbesondere dass die Schale der Mikrosphären gebildet ist aus einem Copolymer aus Monomeren umfassend Alkyl(meth)acrylat, Vinylidenchlorid und Acrylnitril oder aus Monomeren umfassend mindestens ein Vinylether-Monomer und Acrylnitril.

8. Koagulat gemäß einem oder mehreren der vorhergehenden Ansprüche, **dadurch gekennzeichnet, dass** die Mikrosphären eine Expansionsstarttemperatur (Tₛₜₐᵣₜ) von 40 °C oder mehr bis 140 °C oder weniger und eine Temperatur maximaler Expansion (Tₘₐₓ), welche höher liegt als Tₛₜₐᵣₜ und im Bereich von 80 °C oder mehr bis 200 °C oder weniger liegt, aufweisen.

9. Koagulat gemäß einem oder mehreren der vorhergehenden Ansprüche, **dadurch gekennzeichnet, dass** die Koagulation thermisch erfolgt durch Erwärmen auf eine Temperatur von 50 °C oder mehr bis 150 °C oder weniger, vorzugsweise 60 °C oder mehr bis 110 °C oder weniger, und/oder dass die Koagulation durch Scherung erfolgt mit Scherraten von 100 1/s oder mehr bis 500.000 1/s oder weniger.

10. Verfahren zur Herstellung des Koagulats, wie in einem oder mehreren der Ansprüche 1 bis 9 definiert, durch thermische und/oder mechanische und/oder Ultraschall-initiierte Koagulation einer wässrigen Polymerdispersion umfassend
(i) wenigstens ein in wässriger Phase dispergiertes Polymer ausgewählt aus der Gruppe bestehend aus Polyurethan, Vinylacetat/Ethylen-Copolymeren, Polyvinylacetat (PVAc), Polyacrylat, Polystyrolacrylat, Styrol/Butadien-(Block-) Copolymer, Styrol/Isopren-(Block-) Copolymer, Polyisopren-Copolymer, Polychloropren, Polyolefin Homopolymere und Copolymere aus C₂-C₈ Alkenen, Polyepoxid und Polymilchsäure,
(ii) ein Treibmittel enthaltende, thermoplastische Mikrosphären, und
(iii) wenigstens eine zusätzliche Komponente, die ausgewählt ist aus der Gruppe bestehend aus Polyolen, Polyaminen und thermoplastischen Polymeren, die ausgewählt sind aus der Gruppe bestehend aus Polyamid, Polyester und Polystyrol.

11. Klebstoff oder Bindemittel umfassend das oder bestehend aus dem Koagulat gemäß einem oder mehreren der Ansprüche 1 bis 9.

12. Substrat, ganz oder teilweise beschichtet mit dem Koagulat gemäß Anspruch einem oder mehreren der Ansprüche 1 bis 9, oder dem Klebstoff gemäß Anspruch 11.

13. Beschichtetes Substrat gemäß Anspruch 12, **dadurch gekennzeichnet, dass** das Substrat ausgewählt ist aus der Gruppe bestehend aus Papier, Pappe, Karton, Holz, Stein, Beton, Non-Woven aus künstlichen und/oder natürlichen Fasern, gewebte Textilien aus künstlichen und/oder natürlichen Fasern, offenporige oder geschlossen-porige Polymerschaumstoffe, insbesondere bestehend aus Polyurethan, Polyester, Polyethylen, Polypropylen und Polystyrol, oder Komposite der vorgenannten Substrate.

14. Verfahren zur Herstellung eines beschichteten Substrats wie in Anspruch 13 definiert, **dadurch gekennzeichnet, dass** das Koagulat, wie in einem oder mehreren der Ansprüche 1 bis 9 definiert, oder der Klebstoff, wie in Anspruch 11 definiert, ganz oder teilweise auf die Oberfläche wenigstens eines Substrats aufgetragen wird.

15. Verwendung des Koagulats gemäß einem oder mehreren der Ansprüche 1 bis 9 als Klebstoff zum Verbinden von Substraten oder als Bindemittel bei 3D-Druck Verfahren.

16. 3D-Druck-Gebilde oder Objekt umfassend das Bindemittel gemäß Anspruch 11.

## Claims

1. A coagulate obtainable by the thermal and/or mechanical and/or ultrasound-initiated coagulation of an aqueous polymer dispersion, comprising
(i) at least one polymer dispersed in an aqueous phase and selected from the group consisting of polyurethane, vinyl acetate/ethylene copolymers, poly(vinyl acetate) (PVAc), polyacrylate, poly(styrene/acrylate), styrene/butadiene (block) copolymer, styrene/isoprene (block) copolymer, polyisoprene copolymer, polychloroprene, polyolefin homopolymers and copolymers of C₂-C₈ alkenes, polyepoxide and polylactic acid,
(ii) thermoplastic microspheres containing a blowing agent, and
(iii) at least one additional component selected from the group consisting of polyols, polyamines and thermoplastic polymers selected from the group consisting of polyamide, polyester and polystyrene.

2. The coagulate according to claim 1, **characterized in that** said polyol is selected from the group consisting of (poly)propylene glycol, (poly)ethylene glycol, glycerol and starch, and said polyamine is urea, and said thermoplastic polymers are selected from the group consisting of polyamide, polyester and polystyrene.

3. The coagulate according to one or more of the preceding claims, **characterized in that** it is caused to coagulate by an input of energy, preferably thermal and/or mechanical energy input and/or by the action of ultrasound.

4. The coagulate according to one or more of the preceding claims, **characterized in that** the content of dispersed polymer in the polymer dispersion is 20 % by weight or more to 75 % by weight or less, the content of said microspheres in the polymer dispersion is 0.1 % by weight or more to 20 % by weight or less, and the total solids content of said aqueous polymer dispersion is preferably 30 % by weight or more to 80 % by weight or less.

5. The coagulate according to one or more of the preceding claims, **characterized in that** the content of additional component in the polymer dispersion is from 1 % by weight or more to 15 % by weight or less, from 1 % by weight or more to 8 % by weight or less, or from 2 % by weight or more to 5 % by weight or less.

6. The coagulate according to one or more of the preceding claims, **characterized in that** said microspheres have a shell of thermoplastic polymer and a blowing agent enclosed therein, said blowing agent preferably consisting of one or more hydrocarbons having one carbon or more to eight carbons or less in the chain, wherein said microspheres have a volume median particle size D(0.5) of 5 µm or more to 40 µm or less in a non-expanded state.

7. The coagulate according to one or more of the preceding claims, **characterized in that** said shell of said microspheres is formed from a copolymer of ethylenically unsaturated monomers comprising at least one monomer selected from (meth)acrylate ester monomers, vinylidene halide monomers, acrylonitrile and vinyl ether monomers, especially that said shell of said microspheres is formed from a copolymer of monomers comprising alkyl (meth)acrylate, vinylidene chloride and acrylonitrile, or of monomers comprising at least one vinyl ether monomer and acrylonitrile.

8. The coagulate according to one or more of the preceding claims, **characterized in that** said microspheres have an expansion starting temperature (Tₛₜₐᵣₜ) of 40 °C or more to 140 °C or less, and a temperature of maximum expansion (Tₘₐₓ) that is higher than Tₛₜₐᵣₜ and is within a range of from 80 °C or more to 200 °C or less.

9. The coagulate according to one or more of the preceding claims, **characterized in that** said coagulation is effected thermally by heating at a temperature of 50 °C or more to 150 °C or less, preferably 60 °C or more to 110 °C or less, and/or that the coagulation is effected by shearing with shear rates of 100 s⁻¹ or more to 500000 s⁻¹ or less.

10. A process for preparing the coagulate as defined in one or more of claims 1 to 9 by the thermal and/or mechanical and/or ultrasound-initiated coagulation of an aqueous polymer dispersion, comprising
(i) at least one polymer dispersed in an aqueous phase and selected from the group consisting of polyurethane, vinyl acetate/ethylene copolymers, poly(vinyl acetate) (PVAc), polyacrylate, poly(styrene/acrylate), styrene/butadiene (block) copolymer, styrene/isoprene (block) copolymer, polyisoprene copolymer, polychloroprene, polyolefin homopolymers and copolymers of C₂-C₈ alkenes, polyepoxide and polylactic acid,
(ii) thermoplastic microspheres containing a blowing agent, and
(iii) at least one additional component selected from the group consisting of polyols, polyamines and thermoplastic polymers selected from the group consisting of polyamide, polyester and polystyrene.

11. An adhesive or binder comprising or consisting of the coagulate according to one or more of claims 1 to 9.

12. A substrate entirely or partially coated with the coagulate according to one or more of claims 1 to 9 or with the adhesive according to claim 11.

13. The coated substrate according to claim 12, **characterized in that** said substrate is selected from the group consisting of paper, paperboard, cardboard, wood, stone, concrete, non-woven of artificial and/or natural fibers, woven textiles of artificial and/or natural fibers, open-pore or closed-pore polymer foams, especially consisting of polyurethane, polyester, polyethylene, polypropylene and polystyrene, or composites of the above mentioned substrates.

14. A process for preparing a coated substrate as defined in claim 13, **characterized in that** the coagulate as defined in one or more of claims 1 to 9 or the adhesive as defined in claim 11 is entirely or partially coated onto the surface of at least one substrate.

15. Use of the coagulate according to one or more of claims 1 to 9 as an adhesive for the bonding of substrates, or as a binder in 3D-printing methods.

16. A 3D-printed article or object comprising the binder according to claim 11.

## Revendications

1. Masse coagulée, pouvant être obtenue par coagulation thermique et/ou mécanique et/ou amorcée par ultrasons, d'une dispersion aqueuse de polymère comprenant
(i) au moins un polymère dispersé en phase aqueuse choisi dans le groupe constitué par le polyuréthane, les copolymères acétate de vinyle/éthylène, l'acétate de polyvinyle (PVAc), le polyacrylate, l'acrylate de polystyrène, le copolymère (à blocs) styrène/butadiène, le copolymère (à blocs) styrène/isoprène, le copolymère de polyisoprène, le polychloroprène, les homopolymères de polyoléfine et les copolymères issus d'alcènes C₂-C₈, de polyépoxyde et d'acide polylactique,
(ii) des microsphères thermoplastiques contenant un agent gonflant, et
(iii) au moins un composant supplémentaire choisi dans le groupe constitué par les polyols, les polyamines et les polymères thermoplastiques choisis dans le groupe constitué par le polyamide, le polyester et le polystyrène.

2. Masse coagulée selon la revendication 1, **caractérisée en ce que** le polyol est choisi dans le groupe constitué par le (poly)propylèneglycol, le (poly)éthylèneglycol, le glycérol et l'amidon, la polyamine est de l'urée et les polymères thermoplastiques sont choisis dans le groupe constitué par le polyamide, le polyester et le polystyrène.

3. Masse coagulée selon l'une quelconque ou plusieurs des revendications précédentes, **caractérisée en ce qu'**elle coagule grâce à un apport d'énergie, de manière préférée grâce à un apport d'énergie thermique et/ou mécanique et/ou par l'action d'ultrasons.

4. Masse coagulée selon l'une quelconque ou plusieurs des revendications précédentes, **caractérisée en ce que** la teneur en polymère dispersé dans la dispersion de polymère est supérieure ou égale à 20 % en poids et inférieure ou égale à 75 % en poids, la teneur en microsphères dans la dispersion de polymère est supérieure ou égale à 0,1 % en poids et inférieure ou égale à 20 % en poids et la teneur totale en matières solides de la dispersion aqueuse de polymère est de manière préférée supérieure ou égale à 30 % en poids et inférieure ou égale à 80 % en poids.

5. Masse coagulée selon l'une quelconque ou plusieurs des revendications précédentes, **caractérisée en ce que** la teneur en composant supplémentaire dans la dispersion de polymère est supérieure ou égale à 1 % en poids et inférieure ou égale à 15 % en poids, supérieure ou égale à 1 % en poids et inférieure ou égale à 8 % en poids, ou supérieure ou égale à 2 % en poids et inférieure ou égale à 5 % en poids.

6. Masse coagulée selon l'une quelconque ou plusieurs des revendications précédentes, **caractérisée en ce que** les microsphères présentent une enveloppe de polymère thermoplastique et un agent gonflant enfermé dans celle-ci, comprenant de manière préférée un ou plusieurs hydrocarbure(s) présentant un nombre d'atomes de carbone supérieur ou égal à un et inférieur ou égal à huit, dans laquelle les microsphères présentent à l'état non expansé une taille de particule avec un volume médian D(0,5) supérieur ou égal à 5 µm et inférieur ou égal à 40 µm.

7. Masse coagulée selon l'une quelconque ou plusieurs des revendications précédentes, **caractérisée en ce que** l'enveloppe des microsphères est formée d'un copolymère issu de monomères éthyléniquement insaturés comprenant au moins un monomère choisi parmi les monomères d'ester (méth)acrylique, les monomères d'halogénure de vinylidène, les monomères d'acrylonitrile et d'éther de vinyle, en particulier **en ce que** l'enveloppe des microsphères est formée d'un copolymère issu de monomères comprenant du (méth)acrylate d'alkyle, du chlorure de vinylidène et de l'acrylonitrile ou de monomères comprenant au moins un monomère d'éther de vinyle et de l'acrylonitrile.

8. Masse coagulée selon l'une quelconque ou plusieurs des revendications précédentes, **caractérisée en ce que** les microsphères présentent une température de début d'expansion (Tₛₜₐᵣₜ) supérieure ou égale à 40°C et inférieure ou égale à 140°C et une température d'expansion maximale (Tₘₐₓ) supérieure à Tₛₜₐᵣₜ et supérieure ou égale à 80°C et inférieure ou égale à 200°C.

9. Masse coagulée selon l'une quelconque ou plusieurs des revendications précédentes, **caractérisée en ce que** la coagulation intervient de manière thermique par chauffage à une température supérieure ou égale à 50°C et inférieure ou égale à 150°C, de manière préférée supérieure ou égale à 60°C et inférieure ou égale à 110°C, et/ou **en ce que** la coagulation intervient par cisaillement à des vitesses de cisaillement supérieures ou égales à 100 l/s et inférieures ou égales à 500 000 l/s.

10. Procédé de fabrication de la masse coagulée, telle que définie selon l'une quelconque ou plusieurs des revendications 1 à 9, par coagulation thermique et/ou mécanique et/ou amorcée par ultrasons d'une dispersion aqueuse de polymère comprenant
(i) au moins un polymère dispersé en phase aqueuse choisi dans le groupe constitué par le polyuréthane, les copolymères acétate de vinyle/éthylène, l'acétate de polyvinyle (PVAc), le polyacrylate, l'acrylate de polystyrène, le copolymère (à blocs) styrène/butadiène, le copolymère (à blocs) styrène/isoprène, le copolymère de polyisoprène, le polychloroprène, les homopolymères de polyoléfine et les copolymères issus d'alcènes C2-C8, de polyépoxyde et d'acide polylactique,
(ii) des microsphères thermoplastiques contenant un agent gonflant, et
(iii) au moins un composant supplémentaire choisi dans le groupe constitué par les polyols, les polyamines et les polymères thermoplastiques choisis dans le groupe constitué par le polyamide, le polyester et le polystyrène.

11. Colle ou liant comprenant la masse coagulée ou constitué(e) par la masse coagulée selon l'une quelconque ou plusieurs des revendications 1 à 9.

12. Substrat entièrement ou partiellement revêtu de la masse coagulée selon l'une quelconque ou plusieurs des revendications 1 à 9, ou de la colle selon la revendication 11.

13. Substrat revêtu selon la revendication 12, **caractérisé en ce que** le substrat est choisi dans le groupe constitué par le papier, le carton-pâte, le carton, le bois, la pierre, le béton, les non-tissés issus de fibres artificielles et/ou naturelles, les textiles tissés issus de fibres artificielles et/ou naturelles, les mousses polymères à pores ouverts ou pores fermés, en particulier constituées de polyuréthane, de polyester, de polyéthylène, de polypropylène et de polystyrène, ou des composites desdits substrats.

14. Procédé de fabrication d'un substrat revêtu, tel que défini selon la revendication 13, **caractérisé en ce que** la masse coagulée, telle que définie selon l'une quelconque ou plusieurs des revendications 1 à 9, ou la colle, telle que définie selon la revendication 11, est appliquée entièrement ou partiellement sur la surface d'au moins un substrat.

15. Utilisation de la masse coagulée selon l'une quelconque ou plusieurs des revendications 1 à 9 en tant que colle permettant de lier des substrats ou en tant que liant pour des procédés d'impression 3D.

16. Structure ou objet d'impression 3D comprenant le liant selon la revendication 11.
